Europäisches Patentamt

European Patent Office

Office européen des brevets

(11) Numéro de publication: **0 025 398**
**B2**

(12) # NOUVEAU FASCICULE DE BREVET EUROPEEN

(45) Date de publication du nouveau fascicule du brevet:
**26.07.89**

(51) Int. Cl.⁴: **G 02 B 23/08**, G 02 B 23/12

(21) Numéro de dépôt: **80401275.5**

(22) Date de dépôt: **05.09.80**

(54) **Système optique à plusieurs champs.**

(30) Priorité: **07.09.79 FR 7922490**

(43) Date de publication de la demande:
**18.03.81 Bulletin 81/11**

(45) Mention de la délivrance du brevet:
**17.04.85 Bulletin 85/16**

(45) Mention de la décision concernant l'opposition:
**26.07.89 Bulletin 89/30**

(84) Etats contractants désignés:
**AT BE CH DE GB IT LI LU NL SE**

(56) Documents cités:
**DE-A- 2 746 076**
**DE-B- 1 087 366**
**DE-B- 1 220 165**
**DE-C- 98 250**
**DE-C- 237 072**
**GB-A- 1 272 741**
**US-A- 2 978 956**

• **Karl Mütze, ABC der Optik, Verlag Werner Dausien,**
**Hanau (1961), p. 846**
**König/Köhler, Die Fernrohre und**
**Entfernungsmesser,1959, page 177**

(73) Titulaire: **SOCIETE D'OPTIQUE PRECISION**
**ELECTRONIQUE ET MECANIQUE - SOPELEM,**
**125 boulevard Davout, F-75020 Paris (FR)**

(72) Inventeur: **Baluteau, Jean-Michel, 77 allée de Chartres,**
**F-93190 Livry-Gargan (FR)**

(74) Mandataire: **Phélip, Bruno et al, c/o Cabinet Harlé &**
**Phélip 21, rue de La Rochefoucauld, F-75009 Paris (FR)**

## Description

La présente invention se rapporte à un système optique présentant un groupe avant formé d'au moins une lentille, la lumière venant dudit groupe étant séparée en deux voies d'observation ou de détection par un élément réflecteur qui laisse passer la lumière sur la première voie et réfléchit la lumière sur la seconde voie.

Ce système est notamment adapté à un périscope ayant une voie pour la vision nocturne et une voie pour la vision diurne.

Le brevet DE-C-237 072 décrit un système afocal formé de deux lentilles et susceptible d'être placé, par rotation autour d'un réflecteur, devant un objectif ou d'être escamoté. Ce système ne permet pas de garder la même courbure de champ dans les deux cas. Il ne peut être adapté à un instrument ayant deux voies séparées à partir du réflecteur.

Le brevet DE-B-1 220 165 décrit un instrument optique comportant un réflecteur permettant de séparer le faisceau en deux voies. Cet instrument ne permet pas d'obtenir des grossissements et champs différents sur l'une ou l'autre des deux voies.

La présente invention a pour but d'obtenir deux champs et grossissements différents sur la seconde voie sans modifier la courbure de champ. Ce résultat est obtenu de manière simple par rotation d'un élément optique autour d'un réflecteur. Le système permet dans un instrument à deux voies se séparant à partir du réflecteur de positionner l'élément optique mobile en position de travail sur l'une des deux voies sans encombrer l'autre voie. L'encombrement donné par ce système est réduit.

Conformément à l'invention, pour obtenir deux grossissements et deux champs différents sur la seconde voie, le système comporte un véhicule mobile comprenant au moins une lentille qui est déplacée par un mécanisme d'oscillation autour d'un axe de rotation passant par le point de concours de l'axe optique commun et de l'axe optique réfléchi sur l'élément réflecteur et perpendiculaire à ces axes, entre une position centrée sur l'axe optique commun, entre ledit groupe avant et ledit élément réflecteur et une position centrée sur l'axe optique réflechi entre l'élément réflecteur et les éléments optiques et pour les deux positions du véhicule mobile, les plans conjugués relatifs à ce véhicule sont fixes.

Selon un mode de réalisation de l'invention, l'élément réflecteur est pourvu d'une surface dont une première partie est réfléchissante pour réfléchir la lumière vers les éléments optiques et dont une autre laisse passer la lumière vers des éléments optiques de la première voie d'observation ou détection.

L'invention va maintenant être décrite avec plus de détails en se référant à un mode de réalisation donné à titre d'exemple et représenté par les dessins annexés.

La figure 1 est une vue schématique du système optique selon l'invention.

La figure 2 est une vue du système optique qui montre une position différente du véhicule mobile.

La figure 3 est une vue de détail d'un mode de réalisation d'un mécanisme permettant le déplacement du véhicule mobile.

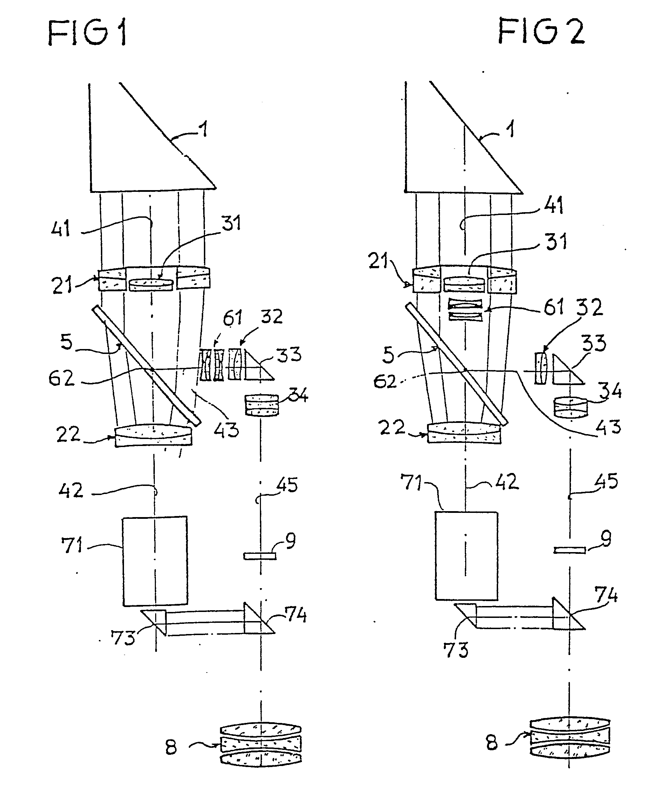

Le système optique représenté par les figures 1 et 2 est monté dans un périscope comprenant, en tête, un prisme 1 qui peut pivoter en site autour d'un axe horizontal. Ce système est disposé en arrière de ce prisme de tête 1, si l'on se réfère au sens de propagation de la lumière. Il comprend une première voie d'observation (pour l'observation diurne) sur laquelle est disposée une optique comprenant un groupe avant 31 d'au moins une lentille et un groupe arrière 32 d'au moins une lentille. Au moins, un groupe de lentilles tel que 34 est disposé en arrière du groupe 32. Il comprend une seconde voie d'observation (voie nocturne) sur laquelle est disposée une optique comprenant un groupe 21 d'au moins une lentille et un groupe arrière 22 d'au moins une lentille. Le groupe 22 pourrait lui aussi être suivi d'un groupe de lentilles si nécessaire. Les deux groupes avant 21 et 31 sont centrés sur l'axe optique avant commun 41. Le groupe avant 21 de l'objectif d'observation nocturne est constitué par des lentilles annulaires qui forment un logement dans lequel est disposé le groupe avant 31 de l'objectif d'observation diurne. Sur le mode de réalisation représenté par les dessins, les deux groupes 21 et 31 sont, chacun, constitués par un doublet formé d'une lentille convergente accolée à une lentille divergente.

Le système comprend un élément réflecteur 5 qui réfléchit le faisceau lumineux de la première voie d'observation. Cet élément réflecteur est situé après le groupe avant 31 de l'objectif d'observation diurne. Il est doté d'une surface réfléchissante 51. Cette surface réfléchissante réfléchit le faisceau lumineux venant du groupe avant 31. De ce fait, cette surface réfléchissante a une forme sensiblement elliptique centrée sur l'axe optique commun 41. De préférence cette surface réfléchissante est inclinée à 45° par rapport à l'axe optique commun 41. De préférence cet élément réflecteur 5 est constitué par une lame à faces parallèles 52 sur laquelle a été effectué un dépôt réflecteur localisé 51, centré sur l'axe optique 41.

Le groupe avant 31 de l'optique d'observation diurne coopère avec un groupe arrière 32 composé d'au moins une lentille. Ce groupe arrière 32 est centré sur l'axe 43 qui est symétrique de l'axe 41 par rapport à la normale à la surface réfléchissante de l'élément réflecteur 5. Le groupe avant 21 de l'optique d'observation nocturne coopère avec un groupe arrière 22 qui est constitué par au moins une lentille. Ce groupe 22 est centré sur l'axe optique 42 qui est parallèle et sensiblement aligné à l'axe optique commun 41. Dans le mode de réalisation représenté par les figures annexées, chaque groupe arrière 22 ou 32 est constitué par un doublet formé par une lentille convergente accolée à une lentille divergente. Chaque groupe 22 ou 32 est situé en arrière de l'élément réflecteur.

Le système comprend un véhicule de puissance négative, comprenant au moins une lentille. Plus précisément ce véhicule est constitué par deux doublets divergents formés chacun d'une lentille divergente et d'une lentille convergente. Ce véhicule est susceptible d'être déplacé entre d'une part une position comprise entre le groupe avant de lentilles 31 et l'élément réflecteur 5 de manière à être centré sur l'axe optique 41 et d'autre part une position située après ledit élément réflecteur 5 de manière à être centré sur l'axe optique 43. Plus précisément lorsque le véhicule mobile 61 est centré sur l'axe 43 il occupe une position comprise entre l'élément réflecteur 5 et le groupe arrière 32 de l'objectif d'observation diurne. On notera qu'il n'y a aucune lentille autre que le véhicule entre le groupe 31 et le réflecteur 5 ou entre ce dernier et le groupe 32. Le déplacement du véhicule mobile 61 s'effectue par rotation autour d'un axe de rotation 62 passant par le point de concours des axes optiques 41 et 43 et perpendiculaire à ces axes optiques 41 et 43. Cet axe de rotation 62 est parallèle à la surface réfléchissante de l'élément réflecteur et plus précisément, il est contenu dans le plan de cette surface réfléchissante. Les distances entre le véhicule mobile 61 et l'axe de rotation 62 correspondant respectivement à la position centrée sur l'axe 41 et à la position centrée sur l'axe 43 sont égales.

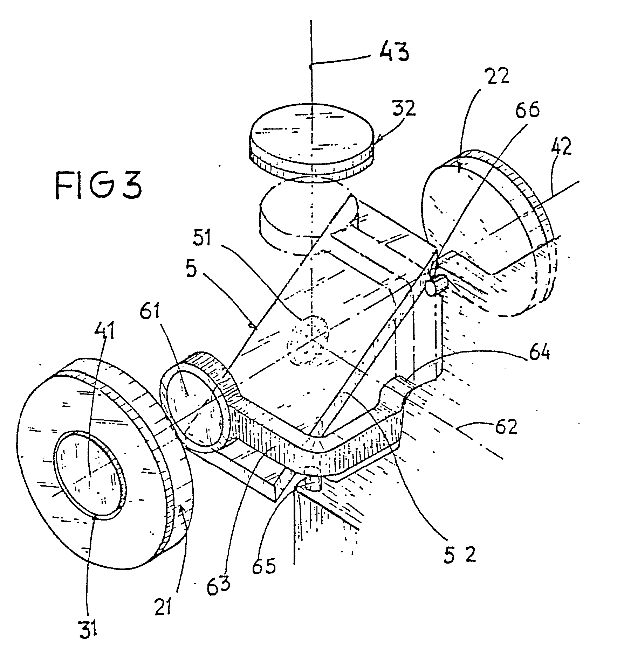

La figure 3 représente un mode de réalisation du mécanisme de rotation du véhicule mobile. Le véhicule 61 est logé dans une monture solidaire d'un bras coudé 63. Ce bras est guidé par une articulation 64 dont l'axe 62 est perpendiculaire à 41 et 43. Cette articulation 64 est disposée de manière décalée par rapport à l'axe optique 41 et par rapport à l'élément réflecteur 5 de manière à ne pas réduire le champ de l'objectif. Le mouvement de rotation du bras 63 est limité par des butées réglables 65 et 66 qui déterminent les deux positions du véhicule 61 centrées sur les axes 41 et 43.

Un tube 71 à intensification de luminance, centré sur l'axe optique 42, est positionné en arrière du groupe arrière 22 de l'objectif d'observation nocturne. Le faisceau lumineux est réfléchi ensuite par des réflecteurs 73 et 74. Dans le mode de réalisation représenté par les dessins, ces réflecteurs sont constitués par exemple par des prismes triangulaires rectangles isocèles appelés encore «prismes à réflexion totale». Le réflecteur 74 est escamotable de manière à dégager la voie de vision diurne. Le réflecteur 73 est éventuellement escamotable en même temps que le réflecteur 74.

En arrière du groupe arrière 32 de l'objectif d'observation diurne, le faisceau lumineux est réfléchi par un réflecteur 33 vers le réflecteur 74. Les deux réflecteurs 33 et 74 sont alignés selon l'axe optique 45 parallèle à l'axe optique 41. L'image donnée par la voie d'observation diurne traverse le réflecteur 74 constitué par un prisme à réflexion totale. En arrière du prisme 74, la voie de la vision nocturne et la voie de la vision diurne suivent une optique commune. Cette optique commune est constituée par l'ensemble des véhicules et du bloc oculaire et elle comporte, en avant, un groupe de lentilles 8 qui est centré sur l'axe optique 45. Un micromètre 9 est disposé sur la voie de vision diurne. Les distances optiques entre le groupe 8 et la sortie du tube d'une part et entre le groupe 8 et le réticule 9 d'autre part sont égales.

Le principe de fonctionnement et les caractéristiques optiques de l'objectif dont la réalisation pratique vient d'être donnée vont maintenant être explicités.

Le faisceau lumineux qui traverse le groupe avant 31 de lentilles centrales est réfléchi par la surface réfléchissante du réflecteur 5. Le faisceau réfléchi est dirigé vers le groupe arrière 32. Le faisceau lumineux doit traverser le véhicule 61 qui est positionné soit sur l'axe optique 41 entre le réflecteur 5 et le groupe avant 31 soit sur l'axe optique 43 entre l'élément réflecteur 5 et le groupe arrière 32. En arrière du groupe arrière 32, le faisceau est réfléchi par le réflecteur 33 vers le groupe 8.

Le faisceau lumineux qui traverse le groupe avant 21 de lentilles annulaires traverse la lame à faces parallèles 52 sans être réfléchi par la surface réfléchissante 51. En arrière de l'élément réflecteur 5, le faisceau traverse le groupe arrière 22 d'où il est focalisé sur l'entrée du tube à intensification de luminance 71. L'axe optique de la vision nocturne est confondu avec l'axe optique de la vision diurne 45, devant le groupe 8, par l'intermédiaire des réflecteurs 73 et 74.

Le véhicule mobile 61 qui intervient dans l'observation diurne se déplace de la position comprise entre l'élément réflecteur 5 et le groupe avant 31 (figure 2 et représentation en traits pleins de la figure 3) et une position comprise entre l'élément réflecteur 5 et le groupe arrière 32 (figure 1 et représentation en pointillés de la figure 3). Lorsque le véhicule 61 est en avant de l'élément réflecteur 5 et est centré sur l'axe optique commun 41, le grandissement est relativement petit et le champ est relativement grand. Au contraire, lorsque le véhicule 61 est en arrière de l'élément réflecteur 5 de manière à être centré sur l'axe optique réfléchi le grandissement est relativement grand et le champ est relativement petit. Les grandissements du véhicule 61 qui correspondant respectivement à la position en avant de l'élément réflecteur 5 et à la position en arrière de l'élément réflecteur 5 ont des valeurs inverses. Lorsque le véhicule 61 occupe l'une ou l'autre des deux positions, le plan objet et le plan image (plans conjugués) relatifs à ce véhicule sont fixes.

Dans le cas de la vision diurne, le réflecteur 74 est escamoté, le changement de grossissement s'effectuant par la rotation du véhicule 61. Lorsqu'on veut passer à la vision nocturne, il faut mettre en place le réflecteur 74 sur l'axe 45 et escamoter le véhicule 61 sur l'axe 43 où il n'occulte pas la vision nocturne.

Il est bien entendu que l'on peut sans sortir du cadre de l'invention, imaginer des variantes et des perfectionnements de détails et de même envisager l'emploi de moyens équivalents.

## Revendications

1. Système optique pour l'observation et/ou la détection présentant un groupe avant (21, 31) formé d'au moins une lentille et centré sur un axe optique commun (41), la lumière venant du groupe avant (21, 31) étant séparée en deux voies (42, 43) d'observation ou de détection par un élément réflecteur (5) qui laisse passer la lumière sur la première voie (42) et réfléchit la lumière sur la seconde voie (43, 45) vers des éléments optiques (32, 33, 34, 8) caractérisé par le fait que pour obtenir deux grossissements et champs différents sur la seconde voie (43, 45), le système comporte un véhicule mobile (61) comprenant au moins une lentille qui est déplacé par un mécanisme d'oscillation autour d'un axe de rotation (62) passant par le point de concours de l'axe optique commun (41) et de l'axe optique réfléchi (43) sur l'élément réflecteur (5) et perpendiculaire à ces axes (41, 43) entre une position centrée sur l'axe optique commun (41) entre ledit groupe avant et ledit élément réflecteur et une position centrée sur l'axe optique réfléchi (43) entre l'élément réflecteur (5) et les éléments optiques et en ce que pour les deux positions du véhicule mobile (61), les plans conjugués relatifs à ce véhicule sont fixes.

2. Système optique selon la revendication 1, caractérisé par le fait que le véhicule mobile (61) a une puissance négative.

3. Système optique selon l'une des revendications 1 ou 2, caractérisé par le fait que l'élément réflecteur (5) est pourvu d'une surface dont une première partie est réfléchissante (51) pour réfléchir la lumière vers lesdits éléments optiques (32, 33, 34, 9, 74, 8) et dont une autre laisse passer la lumière vers des éléments optiques (22, 71, 73, 74, 8) de la première voie d'observation ou détection.

4. Système optique selon l'une quelconque des revendications 1 à 3, caractérisé par le fait qu'il comprend un groupe (21) de lentilles annulaires centré sur l'axe optique commun (41) et un groupe (31) de lentilles également centré sur cet axe optique commun et logé dans ledit groupe (21) de lentilles annulaires, l'élément réflecteur étant pourvu d'une surface réfléchissante centrée sur ledit axe optique commun.

5. Système optique selon l'une quelconque des revendications 1 à 4, caractérisé par le fait qu'il comporte un tube (71) à intensification de luminance positionné en arrière de l'élément réflecteur (5).

6. Système optique selon l'une quelconque des revendications 1 à 5, caractérisé par le fait que le véhicule mobile (61) est monté sur un bras (63) guidé en rotation par une articulation (64–62) décalée de l'axe optique commun (41) et dont les mouvements de rotation sont limités par des butées réglables (65–66) déterminant les deux positions.

7. Système optique selon l'une quelconque des revendications 1 à 6, caractérisé par le fait que le véhicule (61) est constitué de deux doublets divergents.

8. Application du système selon l'une quelconque des revendications 1 à 7, à un périscope, le système étant disposé en arrière du prisme de tête (1) du périscope.

## Claims

1. Optical cystem for observation and/or detection comprising a front group (21, 31) formed of at least one lens and centred on a common optical axis (41), the light coming from the front group (21, 31) being separated into two observation or detection paths (42, 43) by a reflector element (5) which allows the light on the first path (42) to pass and reflects the light on the second path (43, 45) towards optical elements (32, 33, 34, 8), characterised by the fact that in order to obtain two different magnifications and fields on the second path (43, 45) the system includes an optical unit (61) comprising at least one lens and displaced by a mechanism for oscillation about an axis of rotation (62) passing through the point of convergence of the common optical axis (41) and the reflected optical axis (43) on the reflector element (5) and perpendicular to these axes (41, 43) between a position centred on the common optical axis (41) between the said front group and the said reflector element and a position centred on the reflected optical axis (43) between the reflector element (5) and the optical elements and in that for the two positions of the movable optical unit (61) the conjugate planes relative to this movable optical unit are fixed.

2. Optical system according to claim 1, characterised in that the movable optical unit (61) has negative power.

3. Optical system according to any of claims 1 or 2, characterised in that the reflector element (5) is provided with a surface a first part of which is reflecting (51) for reflecting the light to the said optical elements (32, 33, 34, 9, 74, 8) while an another part allows the passage of the light to optical elements (22, 71, 73, 74, 8) of the first observation or detection path.

4. Optical system according to any of claims 1 to 3, characterised in that it comprises a group (21) of annular lenses which is centred on the common optical axis (41) and a group (31) of lenses which is likewise centred on this common optical axis and housed in the said group (21) of annular lenses, the reflector element being provided with a reflecting surface centred on the said common optical axis.

5. Optical system according to any of claims 1 to 4, characterised in that it includes a luminance intensification tube (71) positioned to the rear of the reflector element (5).

6. Optical system according to any of claims 1 to 5, characterised in that the movable optical unit (61) is mounted on an arm (63) guided in rotation by an articulation (64–62) offset from the common optical axis (41) and having its rotational movements limited by adjustable stops (65–66) determining the two positions.

7. Optical system according to any of claims 1 to 6, characterized in that the movable optical unit (61) is composed of two divergent doublets.

8. Application of the system according to any of claims 1 to 7 to a periscope, the system being disposed to the rear of the head prism (1) of the periscope.

**Patentansprüche**

1. Optisches System für die Betrachtung und/ oder das Suchen, mit einer Vordergruppe (21, 31), die von wenigstens einer Linse gebildet ist und auf einer gemeinsamen optischen Achse (41) zentriert ist, wobei das Licht, das von der Vordergruppe (21, 31) kommt, in zwei Wege (42, 43) zur Betrachtung oder zum Suchen durch ein Reflektorelement (5) geteilt wird, welches das Licht auf dem ersten Weg (42) durchläßt und das Licht auf dem zweiten Weg (43, 45) zu optischen Elementen (32, 33, 34, 8) hin reflektiert, dadurch gekennzeichnet, daß, um zwei Vergrößerungen und verschiedene Bildflächen auf dem zweiten Weg (43, 45) zu erhalten, das System mit einem bewegbaren Vehikel (61) versehen ist, das wenigstens eine Linse aufweist, die durch einen Oszillationsmechanismus um eine Drehachse (62) bewegt wird, die durch den Schnittpunkt der gemeinsamen optischen Achse (41) und der optischen Achse des vom Reflektorelement (5) reflektierten Strahls (43) verläuft, und zwar senkrecht zu diesen Achsen (41, 43) zwischen einer Stellung, die auf der gemeinsamen optischen Achse (41) zwischen der Vordergruppe und dem Reflektorelement zentriert ist und einer Stellung, die auf der optischen Achse (43) des reflektierten Strahles zwischen dem Reflektorelement (5) und den optischen Elementen zentriert ist, verstellbar ist, und dadurch, daß für die beiden Stellungen des bewegbaren Vehikels (61) die jeweiligen zugeordneten Ebenen ortsfest sind.

2. Optisches System nach Anspruch 1, dadurch gekennzeichnet, daß das bewegbare Vehikel (61) eine negative Brechkraft besitzt.

3. Optisches System nach einem der Ansprüche 1 oder 2, dadurch gekennzeichnet, daß das Reflektorelement (5) mit einer Fläche mit einem ersten reflektierenden Teilbereich (51) versehen ist, um das Licht auf die optischen Elemente (32, 33, 34, 9, 74, 8) zu reflektieren und dessen anderer Bereich das Licht zu den optischen Elementen (22, 71, 73, 74, 8) über den ersten Betrachtungs- oder Suchweg durchtreten läßt.

4. Optisches System nach einem der Ansprüche 1–3, dadurch gekennzeichnet, daß es eine Gruppe (21) von ringförmigen Linsen, die auf der gemeinsamen optischen Achse (41) zentriert sind, und eine Gruppe (31) von ebenfalls auf dieser gemeinsamen optischen Achse zentrierten Linsen aufweist, die in der Gruppe (21) der ringförmigen Linsen angeordnet ist und daß das Reflektorelement mit einer Reflexionsfläche versehen ist, die auf der gemeinsamen optischen Achse zentriert ist.

5. Optisches System nach einem der Ansprüche 1–4, dadurch gekennzeichnet, daß es mit einem Leuchtkraftverstärkungsrohr (71) versehen ist, das hinter dem Reflektorelement (5) angeordnet ist.

6. Optisches System nach einem der Ansprüche 1–5, dadurch gekennzeichnet, daß das bewegbare Vehikel (61) auf einem Arm (63) montiert ist, der drehbar von einer zur gemeinsamen optischen Achse (41) versetzten Gelenkverbindung (64–62) geführt ist und dessen Bewegungen von einstellbaren Anschlägen (65–66) begrenzt sind, welche die beiden Stellungen festlegen.

7. Optisches System nach einem der Ansprüche 1–6, dadurch gekennzeichnet, daß das Vehikel (61) aus zwei divergierenden Dubletten besteht.

8. Anwendung des Systems nach einem der Ansprüche 1–7 auf ein Periskop, wobei das System hinter dem Kopfprisma (1) des Periskops angeordnet ist.

# FIG 1

# FIG 2

FIG 3